# EUROPÄISCHE PATENTSCHRIFT

(11) **EP 1 142 705 B1**
(45) Veröffentlichungstag und Bekanntmachung des Hinweises auf die Patenterteilung: **07.11.2007**
(21) Anmeldenummer: 01107640.3
(22) Anmeldetag: 28.03.2001
(51) Int. Cl.: B32B 27/36, B32B 27/08, B32B 27/30, B32B 17/10

(54) **Transparenter Mehrschicht-Verbund**
Transparent multilayer laminate
Laminé multicouche transparent

(30) Priorität: 05.04.2000 DE 10017035
(43) Veröffentlichungstag der Anmeldung: 10.10.2001
(73) Patentinhaber: Schorning, Martin, 33607 Bielefeld (DE)
(72) Erfinder: Schorning, Martin, 33607 Bielefeld (DE)
(74) Vertreter: Deckers, Hellmuth Alexander

(56) Entgegenhaltungen:
- FR-A- 2 713 628
- US-A- 4 204 025
- US-A- 4 204 026
- US-A- 5 443 877

## Beschreibung

Die Erfindung betrifft einen transparenten Mehrschicht-Verbund, Verfahren zu dessen Herstellung und dessen Verwendung insbesondere als Maschinenschutzverglasung.

Bei Bearbeitungsmaschinen für harte Materialien, wie Holz, Metall, Keramik, bei denen entweder das Werkstück oder das Bearbeitungswerkzeug mit teilweise hohen Drehzahlen rotieren, ist es erwünscht, den Fortgang der Bearbeitung visuell, durch direkte Beobachtung oder Bildübertragung, verfolgen zu können. Dazu muß ein Teil des Arbeitsraums auch während des Bearbeitungsvorgangs der Beobachtung zugänglich sein. Bei Dreh-, Fräs- und Schleifmaschinen können ab-getragene Materialteile dabei mit hohen Geschwindigkeiten aus dem Arbeitsraum heraus-geschleudert werden. Häufig haben diese Materialteile durch den Trennvorgang auch erhöhte Temperaturen. Solche herausgeschleuderten Teile können zu Arbeitsunfällen führen.

Es ist daher erwünscht, das Herausschleudern von Materialteilen zu verhindern, wobei die Sicht auf den Arbeitsraum jedoch nicht oder nur möglichst wenig eingeschränkt werden soll.

Die Sicherheitsnormen für Drehmaschinen (DIN EN 12 415) schreiben vor, daß die Schutzeinrichtungen bestimmten Aufprallenergien standhalten müssen, die sich aus Durchmesser und Umfangsgeschwindigkeit des Spannzeuges ergeben. So müssen für Spannzeugdurchmesser von bis zu 250 mm und Umfangsgeschwindigkeiten von bis zu 63 m/s Aufprallenergien von bis zu 4000 J (Widerstandsklasse B) oder bei Spannzeugdurchmessern über 250 mm bei gleicher Umfangsgeschwindigkeit bis zu 8000 J überstanden werden. Die Prüfung der Sicherheitseinrichtung erfolgt durch Beschuß mit einem Projektil mit definierter Aufprallenergie, wobei die Prüfung bestanden ist, wenn das Projektil die Schutzeinrichtung nicht durchschlägt.

Bis zu ca. 5000 J (Widerstandsklasse C₂) können spezielle Stähle (5 mm dick) oder z. B. Platten aus Polycarbonat (10 bzw. 12 mm dick) eingesetzt werden, höhere Widerstandsklassen lassen sich mit Mehrschicht-Kombinationen (z. B. zwei 5 mm dicke Stahlbleche), oder z.B. 19 bzw. 25 mm dicke Platten aus Polycarbonat erreichen.

Andere durchsichtige Materialien als Polycarbonat (Glas, Polymethylmethacrylat) versagen bereits in der Widerstandsklasse A1 (Aufprallenergie 320 J). Günstiger bezüglich ihrer Schlagfestigkeit verhalten sich beispielsweise (ein- oder mehrachsig) orientiertes Polymethylmethacrylat, Platten aus PET (Hostaglas^{®}, Hagedorn AG) oder PETG. Diese Sicherheitsvorschriften gelten auch für sogenannte Bearbeitungszentren (z. B. Drehzentren), bei denen die transparenten Scheiben zum Teil weiter entfernt von den Maschinen sind.

Aus dem Dokument FR 2 634 417 ist eine kugelsichere Verglasung bekannt, die neben einer Innenschicht aus Polycarbonat Außenschichten aus Glas und aus Polymethylmethacrylat umfaßt.

Aus der veröffentlichten japanischen Patentanmeldung JP 11 - 314 325 A ist eine Mehrschichtverglasung bekannt, deren beide Außenschichten aus Polycarbonat bestehen.

Aus der veröffentlichten japanischen Patentanmeldung JP 08 - 156 187 A ist eine Mehrschichtverglasung bekannt, in der eine Glasscheibe und eine Polycarbonatscheibe durch eine zwischen ihnen liegende Doppelschicht aus einer Polyvinylbutyralfolie und einem Polyurethanklebex verbunden sind.

Ein Nachteil bei Scheiben aus Kunststoffen, insbesondere bei amorphen Kunststoffen wie Polycarbonat, ist neben deren häufig geringen Kratzfestigkeit auch die unzureichende Beständigkeit gegen Kühlschmierstoffe, Fette und Öle. Bei längerzeitiger Einwirkung dieser Agenzien oder ihrer Dämpfe wie auch bei der Einwirkung von Lösungsmitteln bilden sich insbesondere bei amorphen Kunststoffen Spannungsrisse aus, die deren Zähigkeit und damit das Rückhaltvermögen erheblich vermindern. So haben Beschußversuche auf in Werkzeugmaschinen eingebauten Polycarbonatscheiben ergeben, daß nach ca. 5 Jahren Verwendungsdauer deren Rückhaltevermögen auf die Hälfte abgesunken war.

Es ist daher vorgeschlagen worden, mehrteilige Verbunde einzusetzen, wobei eine Kunststoffscheibe, insbesondere eine Polycarbonatscheibe, in der Mitte eines Verbunds auf der Arbeitsraumseite durch eine Scheibe aus einem Sicherheitsglas und auf der Bedienerseite durch eine Scheibe aus einem weniger spannungsrißempfindlichen transparenten Kunststoff gegen einen Angriff des Polycarbonats durch Kühlschmierstoffe, Fette und Öle sowie den in der Hallenluft enthaltenen Nebeln dieser Stoffe geschützt wird (Die BG, Heft 10, 1998, Seiten 1 bis 5).

Diese mehrlagige Ausführung führt jedoch wegen der Anzahl der Grenzflächen zwischen Luft und höherbrechendem transparenten Material zu Spiegelungen und Interferenzen, die die Klarheit des Bildes beeinträchtigen. Weiter bietet auch die Abdichtung des Innenraums dieses Verbunds, in dem die transparente Kunststoffscheibe (z. B. die Polycarbonatscheibe) angeordnet ist, keinen zuverlässigen Schutz gegen die Einwirkung der genannten Flüssigkeiten bzw. Dämpfe über längere Zeit.

Es besteht daher die Aufgabe, einen transparenten Verbund insbesondere für die Maschinenschutzverglasung zu finden, der ein optimales Rückhalten abgeschleuderter Teile aus drehenden Maschinen auch nach längerer Betriebszeit ermöglicht und dabei die Beobachtung des Arbeitsraums möglichst wenig behindert.

Diese Aufgabe wird gelöst durch einen Mehrschicht-Verbund gemäß Anspruch 1.

Dabei ist bevorzugt, daß zwischen mindestens einer der Außenschichten und der Innenschicht keine Gasschicht als Trennschicht eingesetzt wird.

Soweit die transparenten Mehrschicht-Verbunde zur Herstellung von Sicherheitsverglasungen in Bearbeitungsmaschinen wie zum Beispiel Dreh- und Fräsmaschinen eingesetzt werden, ist es vorteilhaft, in der dem Arbeitsraum zugewandten Außenschicht als Material Glas einzusetzen, das durch die Späne oder den beim Schleifen erzeugten Abrieb, die oft hohe Temperaturen aufweisen, nicht oberflächlich geschädigt wird. Können derartige Einwirkungen ausgeschlossen werden, so können für die dem Arbeitsraum zugewandte Außenschicht auch Kunststoffmaterialien eingesetzt werden.

Als Innenschicht wird vorzugsweise eine Folie oder Scheibe aus einem amorphen Polymer mit einem kristallinen Anteil von unter 10 % verwendet. Bevorzugt ist die Innenschicht aus einem schlagfesten transparenten Kunststoff ausgeführt, als besonders günstig hat sich dafür Polycarbonat (das Polycarbonat von Bisphenol A, das gegebenen-falls mit geringen Mengen von weniger als 20 % der Masse an Bisphenol A von anderen difunktionellen Hydroxyverbindungen modifiziert ist). Ebenso geeignet sind Copolyestercarbonate oder aromatische Copolyester, bei denen ein Teil der Kohlensäurereste oder sämtliche Kohlensäurereste durch Terephthalsäure- und/oder Isophthalsäure-Reste ersetzt ist, die gegenüber Polycarbonat jedoch geringere Schlagfestigkeit besitzen. Auch Mischungen von Polycarbonat mit anderen Kunststoffen können eingesetzt werden, soweit sie ausreichend transparent sind.

Die Innenschicht kann aus einer einzigen Folie oder Scheibe aus den genannten transparenten Kunststoffen bestehen, es ist jedoch auch möglich, zwei oder mehr Folien oder Scheiben aufeinander zu laminieren. Es hat sich gezeigt, daß mehrlagige Laminate von transparenten Kunststoff-Folien deutlich höhere Rückhaltevermögen für Projektile und deutlich höhere Schlagzähigkeit besitzen als Folien oder Scheiben gleicher Dicke, die aus einer oder wenigen Lagen bestehen.

Die Herstellung derartiger Laminate erfolgt nach den bekannten Verfahren.

Insbesondere geeignet für mehrlagige Laminate als Innenschichten sind Folien, vor allem gereckte (ein- oder mehrachsig durch Verstreckung orientierte) Folien aus teilkristallinen Thermoplasten wie Polyolefinen, insbesondere Polypropylen oder Polyestern, insbesondere Polyäthylenterephthalat oder -2,6-naphthalat oder Copolyester, die Anteile von den genannten Polyestern und anderen Diol-Komponenten (z. B. 1,4-Butandiol, 1,3-Propandiol und 1,4-Bishydroxymethylcyclohexan), von anderen Dicarbonsäuren, wie 4,4'-Diphenyl-sulfon-dicarbonsäure oder 4,4'-Diphenyldicarbonsäure, oder von Hydroxysäuren, wie Glykolsäure, p-Hydroxy-benzoesäure oder 2-Hydroxy-6-naphthoesäure, enthalten, wobei diese Folien bevorzugt so aufeinander laminiert werden, daß ihre Verstreckrichtungen (bei einachsig orientierten Folien) bzw. ihre Hauptfestigkeitsrichtung (bei mehrachsig orientierten Folien die Richtung mit der höchsten Zugfestigkeit) in aufeinanderfolgenden Lagen senkrecht aufeinander stehen. Durch diesen bevorzugten Aufbau erhält man Platten mit in der Fläche isotropen Festigkeitseigenschaften.

Werden Polycarbonat, aromatische Copolyester oder Copolyestercarbonate als Außenschicht eingesetzt, so ist es vorteilhaft, auf diese Schicht einen Schutz gegen Verkratzen oder Abrieb anzubringen. Diese Schutzschicht kann eine auflaminierte Folie mit größerer Kratzfestigkeit als der der Innenschicht sein, besonders günstig ist in diesem Fall auch eine Beschichtung, die auf reaktiven Siliciumverbindungen oder reaktiven Melaminharzen basiert, und die in flüssiger Form, gegebenenfalls transparente Füllstoffe enthaltend, auf die Oberfläche der Platte aus dem transparenten Kunststoff aufgebracht und darauf unter Zusatz von Vernetzern verfestigt wird. Geeignet sind Beschichtungen enthaltend kolloidale Kieselsäure und ein vernetzbares organisches Polysiloxan, beispielsweise auf Basis von Silanolen, die vorzugsweise in situ durch Reaktion von Alkyltrialkoxysilanen und kolloidaler Kieselsäure in Gegenwart von Säuren wie z. B. Eisessig gebildet werden. Diese Schutzschicht wird bevorzugt nur auf der der Innenschicht abgewandten Seite aufgebracht; es ist aber auch möglich, beide Seiten der Außenschicht derart an der Oberfläche zu modifizieren.

Die Haftung solcher Schichten auf den transparenten Kunststoffscheiben kann durch vorheriges Beschichten mit einem Primer verbessert werden, bewährt hat sich dafür beispielsweise in Kombination mit einem Substrat aus Polycarbonat oder Copolyestercarbonaten ein reaktives Acrylatharz, wie es in der Patentschrift US-A 4,207,357 beschrieben ist.

Sowohl die genannten Beschichtungen als auch amorphe oder (mono- oder biaxial) orientierte transparente Folien aus Polyestern wie Polyäthylenterephthalat, Copolyäthylenterephtalatpolyestern, in denen ein Teil des Glykols durch andere Diole wie 1,4-Bis(hydroxymethyl)-cyclohexan, Diäthylenglykol, Neopentylglykol oder 1,2- bzw. 1,3-Propandiol ersetzt ist, mit Hydroxysäuren oder anderen Dicarbonsäuren wie beispielsweise den oben genannten modifizierte Polyestern, Polyäthylen-2,6-naphthalat, Polybutylenterephthalat, dem Polyester aus Terephthalsäure und Cyclohexan-dimethanol, und aus Copolyestern wie Polyäthyleniso/terephthalat, Polyäthylenterephthalat-co-diphenyl-4,4'-di-carbogylat können als Außenschicht verwendet werden. Andere geeignete Beschichtungsfolien sind solche auf Basis von Acrylnitril-Copolymeren, Polyvinylchlorid, Polyvinylidenchlorid, Polyvinylfluorid und Polyvinylidenfluorid (die besonders günstig in Bezug auf ihre Barriere-Eigenschaften sind), von (möglichst weitgehend) amorphen Copolymeren des Tetrafluoräthylens wie z.B. ETFE, Terpolymeren von Tetrafluoräthylen, Vinylidenfluorid und Hexafluorpropen, Co- und Terpolymeren von Tetrafluoräthylen und perfluorierten Fünf-, Sechs oder Siebenring-Verbindungen mit mindestens einem Sauerstoffatom und mit olefinischen Doppelbindungen im Ring, am Ring (abgeleitet von den Methylencyclopentan-, -hexan- oder -heptan-Körpern) oder an einer Seitenkette, gegebenenfalls in Mischung mit Hexafluorpropen, von transparenten Copolyolefinen wie z. B. Copolymeren von Äthylen oder Propylen und polycyclischen Olefinen wie Norbornen, und EVA (Äthylen-Vinylacetat) oder EVAL (Äthylen-Vinylalkohol), (zumindest einseitig) kratzfest beschichtetem Polycarbonat oder Copolyestercarbonaten, Polymethylmethacrylat, Polyurethanen, Polysulfonen (PSU und PES), aromatischen Copolyestern auf Basis von Bisphenol A und aromatischen Dicarbonsäuren, amorphen Polyamiden, Polyätherimid (^{®}Ultem der General Electric Plastics), oder Polyimiden (^{®}Kapton der E. I. DuPont de Nemours).

Selbstverständlich können die als Außenschicht eingesetzten Folien auch mehrlagig sein; auf diese Weise läßt sich beispielsweise eine besonders günstige Sperrschichteigenschaft mit günstiger Oberflächenbeständigkeit kombinieren, wenn eine zweilagige Folie als Außen-schicht eingesetzt wird, deren der Innenschicht zugewandte Lage aus einem Material mit niedrigem Diffusionskoeffizienten für Gase und die der Innenschicht abgewandte Lage aus einem Material mit hoher Kratzfestigkeit besteht. Besonders geeignet sind hierfür Verbundfolien, die herstellbar sind durch Beschichtung von transparenten Kunststoffolien mit Copolymeren, die Vinyl- oder Vinyliden-halogenide, insbesondere Vinylidenchlorid, als Monomere enthalten. Solche Verbundfolien lassen sich auch durch Laminieren aus Folien mit günstigen Barriere-Eigenschaften, wie den oben genannten, und Folien mit günstigen mechanischen Eigenschaften wie Festigkeit und Oberflächenhärte oder Kratzfestigkeit herstellen. Eine UV-Licht absorbierende Folie aus einem Material, das photochemisch wenig empfindlich ist, kann beispielsweise die darunter liegenden Schichten vor photochemischen Veränderungen schützen. Bei den mehrlagigen Folienverbunden ist darauf zu achten, daß Materialien mit ähnlichen Wärmeausdehnungskoeffizienten aufeinander laminiert werden, da es sonst zu Verbiegung oder Delamination bei Temperatur(wechsel)beanspruchung kommen kann.

Die Dicke der als Außenschicht eingesetzten Folien kann von 1µm bis zu 10 mm betragen, bevorzugt ist der Dickenbereich 40 *µ*m bis 6 mm, insbesondere 40 *µ*m bis 1,5 mm, wobei Folien mit einer Dicke von bis zu 400 *µ*m wegen ihrer günstigeren Laminierbarkeit noch bevorzugt werden.

Die Folien können auch durch Farbstoffe transparent eingefärbt werden, ebenso lassen sie sich in bekannter Weise metallisieren, durch Zusätze gegen die Folgen der Bestrahlung mit UV-Licht stabilisieren, sie lassen sich reflektierend oder bedruckbar (z. B. durch Corona-Behandlung) ausrüsten, und schließlich können sie antistatisch, kratzgeschützt oder geschützt gegen Bemalen oder Besprühen ("anti-graffiti") ausgerüstet werden.

Zum Verbinden der unterschiedlichen Schichten der erfindungsgemäßen Mehrschicht-Verbunde können Klebstoffe oder Klebefolien in bekannter Weise eingesetzt werden. Dabei werden weichmacherfreie Klebfolien bevorzugt.

Es ist auch möglich, den Raum zwischen der Innenschicht und den Außenschichten mit Flüssigkeiten, Gelen, transparenten Vergußmassen, elastischen Folien oder Gasen zu füllen. Da jedoch bei jeder Grenzfläche zwischen Medien unterschiedlicher Brechzahl auch Reflexionen auftreten, die die Intensität des transmittierten Lichtes schwächen, ist es bevorzugt, Medien mit ähnlicher Brechzahl wie eine der angrenzenden Schichten zu verwenden. Daher hat es sich als günstig erwiesen, maximal einen der Zwischen-räume mit Luft oder einem anderen Gas zu füllen, da beim Übergang von Luft oder einem anderen Gas zu einem optisch dichteren Medium wie der transparenten Schicht der Unterschied in der Brechzahl und daher auch der Reflexionsverlust besonders hoch ist.

Soweit Polycarbonat oder ein anderer spannungsrißempfindlicher Kunststoff als Innenschicht eingesetzt wird, ist es wesentlich, diese Schicht gegen Einwirkungen von außen (durch Luft oder Dämpfe von Lösungsmitteln oder Ölen oder direkte Einwirkung dieser Flüssigkeiten) zu schützen. Dazu werden die folgenden Möglichkeiten bevorzugt:
a) Der Rand der transparenten Mehrschicht-Verbunde wird mit einer weichmacherfreien und lösungsmittelfreien selbstabbindenden bzw. selbsthärtenden dauerelastischen Dicht- oder Klebmasse bestrichen, wobei die dem Rand benachbarten Bereiche der Außenschichten ebenfalls mit derselben Dicht- oder Klebmasse bestrichen werden, und wobei die Breite der randseitigen Beschichtung der Außen-schicht mindestens das 0,5-fache, bevorzugt mindestens das 1fache und insbesondere mindestens das 1,5fache der Dicke des Verbunds beträgt, und wobei die Kleb- oder Dichtmasse beim Abbinden keine oder nur eine geringe Schrumpfung aufweist, die weniger als 10 % des ursprünglichen Volumens beträgt.
b) Es wird entsprechend der Variante a verfahren, wobei die Dichtmasse eine dauerelastische Polyurethan-Masse ist.
c) Es wird entsprechend der Variante a verfahren, wobei der Dichtstoff eine dauerelastische Silikon-Masse ist.
d) Es wird analog der Variante a verfahren, wobei statt der Dicht- oder Klebmasse der Rand und die randnahen Bereich der Außenschichten mit einem Lack bestrichen werden, der kein Lösungsmittel enthält, das Polycarbonat angreift oder anlöst, und der eine Sperrschichtwirkung für Lösungsmittel oder Öle aufweist.
e) Der Rand des transparenten Mehrschicht-Verbunds wird mit einer Folie abgeklebt, wobei die dem Rand benachbarten Bereiche der Außenschichten ebenfalls mit derselben Folie beklebt werden, und wobei die Breite der randseitigen Beschichtung der Außenschicht mindestens das 0,5-fache, bevorzugt mindestens das 1fache und insbesondere mindestens das 1,5-fache der Dicke des Verbunds beträgt.
f) Es wird wie in Variante e verfahren, wobei anstelle der Folie ein selbstvulkanisierendes Band aufgeklebt wird, das durch Ausdehnung (Verstreckung) aktiviert wird und dann im verstreckten Zustand abbindet (z. B. "self-sealing tape" der Fa. Innotec)
g) Der Rand des transparenten Mehrschicht-Verbunds wird mit einem elastischen, teilweise elastischen oder starren Rahmen gasdicht umschlossen, der der Gestalt des Mehrschicht-Verbunds angepaßt ist.

Selbstverständlich ist es auch möglich, Kombinationen der genannten Verfahren für die Randversiegelung gemeinsam einzusetzen.

Die Sperrschichtwirkung eines Lackfilms kann beispielsweise durch den folgenden Test gezeigt werden:
Ein selbsttragender Lackfilm mit einer Dicke von 70 µm wird als Diaphragma mit einer Fläche von 5 x 5 cm² zwischen zwei Gasräumen gleicher Größe von je 3 l eingesetzt, von denen einer mit Toluoldampf bei 23 °C und 1015 hPa Luftdruck gesättigt ist, und der andere mit reiner (synthetischer) Luft gleichen Drucks gefüllt ist. Dieser Lackfilm wirkt als Sperrschicht für Toluol-Dampf, wenn er die beiden Gasräume so voneinander isoliert, daß nach 24 Stunden und den genannten Temperaturbedingungen der Toluol-Partialdruck im ursprünglich luftgefüllten Gasraum weniger als 1 % des Toluol-Partialdrucks in dem mit Toluol gesättigten Gasraum ist

In dem transparenten Mehrschicht-Verbund decken die Außenschichten die Innenschicht bevorzugt vollflächig ab, wobei in vorteilhafter Weise ein Rahmen oder eine Umrandung den Verbund so gegen die äußere Atmosphäre abdichtet, daß keine Dämpfe oder Flüssigkeiten in das Innere eindringen können und die Schutzwirkung gegen abgeschleuderte Teile (Rückhaltevermögen) oder deren Transparenz um mehr als 10 % vom Ausgangswert nach einer Nutzungszeit von 5 Jahren bei Raumtemperatur (23 °C) verschlechtern.

Die erfindungsgemäßen transparenten Mehrschicht-Verbunde lassen sich herstellen, indem auf eine Innenscheibe aus einem transparenten Kunststoff mindestens zwei weitere Schichten aufgebracht werden, unter Bildung eines Verbundes umfassend eine Innenschicht aus einem transparenten Kunststoff und zwei Außenschichten, deren Material ausgewählt ist aus Glas, Folien aus teilkristallinen Kunststoffen mit einer Transparenz von mindestens 40 %, bevorzugt über 60 % und insbesondere über 80 %, Folien aus amorphen Kunststoffen und transparenten Beschichtung-en zum Schutz gegen mechanische Einwirkungen, wobei die Innenschicht und die Außenschichten durch eine Gas- oder Flüssigkeitsschicht getrennt oder durch eine transparente Klebefolie, eine transparente Schicht eines Klebers oder durch Verschmelzen oder oberflächliche chemische Reaktion der benachbarten Schichten miteinander verbunden sind, mit der Maßgabe, daß bei mindestens einer der Außenschichten keine Gasschicht als Trennschicht eingesetzt wird.

Bevorzugt werden als Schutzverglasung auch solche Mehrschicht-Verbunde, bei denen auf mindestens einer Seite als Außenschicht eine kratzfest beschichtete Folie oder Scheibe und darunter eine Folie oder Scheibe mit einer reflektierenden Schicht oder Bedampfung eingesetzt wird.

Ein Vorteil der erfindungsgemäßen Verbunde ist, daß Einzel- oder Mehrfach-Scheiben aus transparenten Kunststoffen durch Beschichten mit Außenschichten gemäß der obigen Beschreibung ohne größeren Aufwand und sogar ohne Entfernen aus der Fassung bzw. dem Rahmen nachrüstbar sind. Dazu werden üblicherweise Folien entsprechend der Beschreibung der Außenschichten auf die vorhandene Scheibe auflaminiert, und die Randzone der Außenlage wird insbesondere bis zum vorhandenen Rahmen bündig entsprechend einer oder mehrerer der Varianten a bis g verbunden. Bevorzugt sind bei der Nachrüstung die Varianten a bis c (Kleb- oder Dichtmassen) und die Variante d (Lack).

Die so hergestellten transparenten Mehrschicht-Verbunde lassen sich insbesondere als Schutzverglasung in Bearbeitungsmaschinen wie Dreh-, Fräs- und Schleifmaschinen anwenden. Auch für flächige Verglasungen in Bearbeitungszentren wie Drehzentren lassen sie sich einsetzen.

Die Erfindung wird durch die nachfolgenden Beispiele veranschaulicht. Dabei bedeuten die Abkürzungen: PC = Polycarbonat; PET = Polyäthylenterephthalat; PET-A = amorphes Polyäthylenterephthalat(copolymer); PETG = Polyäthylenterephthalat, in welchem ein Teil der Glykol- bzw. Säurekomponente durch cokondensierbare Bausteine wie andere Diole, andere Dicarbonsäuren und/oder Hydroxysäuren ersetzt ist; COC = Cycloolefin-Copolymer, transparentes Copolymer von Äthylen oder Propylen mit (bi)cyclischen Olefinen wie Norbornen; OPP = orientierte Poly-propylen-Folie; BOPP = biaxial orientierte Polypropylen-Folie

### Beispiele

### Beispiel 1

Ein bestehendes Sicherheitsfenster aus Polycarbonat wurde mit einer biaxial orientierten, 70 µm dicken PET-Folie, die auf der einen Seite mit einem drucksensitiven Kleber beschichtet war, nachgerüstet. Hierbei wurde die Naßmethode angewandt. Um eine optisch gute Laminierung zu erreichen, wurde das Fenster vorher gründlich mit einer Spülmittel-Wasserlösung gereinigt, um Staubpartikel und Ablagerungen zu entfernen. Da das Polycarbonat keine abriebfeste Beschichtung hatte, mußte die Reinigung mit viel Flüssigkeit vorgenommen werden, um Kratzer auf der Oberfläche weitgehend zu vermeiden. Nachdem die Oberfläche gereinigt war, wurde sie befeuchtet, um zu verhindern, daß die PET-Folie sofort festklebt. Die Folie wurde etwa 2 cm ringsherum größer geschnitten, wonach die Schutzfolie (auf der Klebstoffschicht) abgezogen wurde. Anschließend wurde die Klebe-schicht mit Wasser befeuchtet, und die PET-Folie mit der Klebeschicht nach unten vorsichtig auf das Polycarbonat-Fenster gelegt. Danach wurden von der Mitte aus mit einem Rakel das Wasser und die Luftblasen entfernt.

### Beispiel 2

Ein 700 x 850 mm² großes Laminatverbund wurde aus einer 12 mm starkem Polycarbonatplatte, welche auf keiner Seite eine kratzbeständige Schutzschicht hatte, und einem 5 mm dicken ESG (Einscheibensicherheitsglas) hergestellt. Die PC-Platte und das ESG wurden am Rand mit dem additiv-freien Dichtstoff ^{®}Adheseal der Firma Innotec derart miteinander verbunden, daß ein gleichmäßiger Luftspalt von 3 mm zwischen den beiden Scheiben blieb. Dieser Abstand wurde mit einer Aluminiumleiste am Rand fixiert. Anschließend wurde eine amorphe, 100 *µ*m dicke PET-Folie, die einseitig mit einer Klebeschicht versehen war, auf die Polycarbonatplatte aufgewalzt. Hierzu wurde eine 1,5 m breite Walzanlage mit hydraulisch betätigten Walzen verwendet. Die Schutzfolie wurde hierzu bei Beginn der Laminierung ein Stück von der Rolle abgezogen, um die Klebeseite der PET-Folie freizulegen. Das Sicherheitsfenster wurde an die Walzen angelegt, nachdem der Walzenspalt auf 19 mm und der Anpreßdruck der Walze auf 300kPa eingestellt wurden. Die Schutzfolie der Polycarbonatscheibe wurde abgezogen, und der Antrieb der Walzen gestartet. Während der Laminierung wurde fortlaufend die Schutzfolie von der PET-Folie abgezogen. Nachdem das Sicherheitsfenster vollflächig laminiert war, wurde ringsherum die auflaminierte Folie gesäumt. Die Kanten des Laminats wurden dann mit dem genannten Dichtstoff Adheseal versiegelt.

### Beispiel 3

Ein PC-Sicherheitsfenster mit den Maßen 600 x 1500 x 6 mm wurde beidseitig mit einer 75 µm dicken metallisierten und einer 75 µm dicken transparenten amorphen PET-Folie beschichtet. Die Lichttransparenz der metallisierten Folie betrug etwa 60 %. Die Platte wurde mit der schmalen Seite zuerst in das Laminiergerät eingeführt. Beide Seiten der Platte wurden gleichseitig mit der Folie beklebt. Beide Folien waren auf der einen Seite mit einer kratz- und abriebbeständigen Schutzschicht und auf der anderen Seite mit einem drucksensitiven Kleber ausgerüstet.

Die Schutzfolie wurde hierzu ein Stück von den beiden Rollen abgezogen, um die Klebeseite der PET-Folien freizulegen. Das Sicherheitsfenster wurde an die Walzen angelegt, nachdem der Walzenspalt auf 5 mm und der Anpreßdruck der Walze auf 300kPa eingestellt wurden. Die Schutzfolie der Polycarbonatscheibe wurde abgezogen, und der Antrieb der Walzen gestartet. Während der Laminierung wurden fortlaufend die Schutzfolien beider PET-Folien abgezogen. Nachdem das Sicherheitsfenster vollflächig laminiert war, wurde ringsherum die auflaminierte Folie gesäumt. Die Kanten des Laminats wurden dann mit dem Dichtstoff ^{®}Adheseal versiegelt.

### Beispiel 4

Ein Sicherheitsfenster aus einem 19 mm dicken PC-Verbund und einem 5 mm dicken VSG (Verbundsicherheitsglas) mit den Maßen von 1144 x 1024 mm wurde hergestellt. Die PC-Verglasung war ohne abriebsfeste Beschichtung ausgerüstet. Vor Herstellung des Glas-PC Verbundes wurden auf der einen Seite nacheinander zwei Folien laminiert. Als erstes wurde eine COC-Folie (Topas^{®}, Ticona GmbH; Wasseraufnahme von weniger als 0,01 %) aufgebracht, die auf einer Seite eine drucksensitive Klebeschicht hat. Anschließend wurde diese Folie mit einer PET-A Folie bedeckt, die eine Wasseraufnahme von etwa 0,5% hat. Die Folien wurden mit einer 1,5 m breiten Folienwalzanlage aufgebracht. Die Schutzfolien wurden hierzu ein Stück von der Rolle abgezogen, um die Klebeseite der COC- bzw. der PET-Folie freizulegen. Der PC-Verbund wurde an die Walzen angelegt, nachdem der Walzenspalt auf 18 mm und der Anpreßdruck der Walze auf 400kPa eingestellt wurden. Die Schutzfolie der Polycarbonatscheibe wurde abgezogen, und der Antrieb der Walzen gestartet. Während der Laminierung wurde fortlaufend die Schutzfolie der COC- bzw. der PET-Folie abgezogen. Nachdem das Sicherheitsfenster vollflächig laminiert war, wurde ringsherum die auflaminierte Folie gesäumt.

Anschließend wurde auf das PC ein 3 mm dicker Aluminiumrahmen, welcher auf beiden Seiten mit Dichtstoff versehen war, aufgelegt. Darauf wurde dann das VSG aufgelegt und in einer Presse angedrückt. Die Kanten des Laminats wurden dann mit dem Dichtstoff^{®} Adheseal versiegelt.

### Beispiel 5

Ein Sicherheitsfenster mit einem 12 mm dicken PC-Verbund und einem 5 mm dicken VSG (Verbundsicherheitsglas) mit den Maßen von 900 x 950 mm wurde hergestellt. Die PC-Verglasung war ohne abriebsfeste Beschichtung ausgerüstet. Vor Herstellung des Glas-PC Verbundes wurde auf einer Seite eine biaxial verstreckte OPP Folie auflaminiert (^{®}Propafilm RHX mit einer Dicke von 50 µm, UCB GmbH). Diese Folie ist vom Hersteller auf beiden Seiten mit einer PVDC-Copolymer-Dispersion beschichtet worden. Diese Beschichtung hat hervorragende Wasserdampf- und Gas-Barriereeigenschaften. Hiermit wird erreicht, daß die Wasserdurchlässigkeit und Wasser-aufnahme der Folie erheblich vermindert wird. Auf einer Seite ist die Folie mit einer drucksensitiven Klebeschicht ausgerüstet. Die PVDC-Beschichtung auf der außenliegenden Seite der Folie dient gleichzeitig als die Abriebs- und Kratzschutz für die Folie.

Die Folien wurden mit einer 1,5 m breiten Folienwalzanlage aufgebracht. Die Schutzfolie wurde hierzu ein Stück von der Rolle abgezogen um die Klebeseite der BOPP-Folie freizulegen. Der PC-Verbund wurde an die Walzen angelegt, nachdem der Walzenspalt auf 11 mm und der Anpreßdruck der Walze auf 300kPa eingestellt wurden. Die Schutzfolie der Polycarbonat-scheibe wurde abgezogen, und der Antrieb der Walzen gestartet. Während der Laminierung wurde fortlaufend die Schutzfolie der BOPP-Folie abgezogen. Nachdem das Sicherheitsfenster vollflächig laminiert war, wurde ringsherum die auflaminierte Folie auf das Fenstermaß gesäumt.

Anschließend wurde auf das PC ein 2 mm dickes doppelseitiges Klebeband ringsherum aufgeklebt. Darauf wurde dann das VSG aufgelegt und in einer Presse angedrückt. Die Kanten dieses Laminats wurden dann mit dem Dichtstoff ^{®}Adheseal vollflächig versiegelt.

## Patentansprüche

1. Transparenter Mehrschicht-Verbund aus mindestens drei Schichten, umfassend eine Innenschicht aus einem transparenten Kunststoff und zwei Außenschichten, deren Material ausgewählt ist aus Glas, Folien aus teilkristallinen Kunststoffen mit einer Transparenz für sichtbares Licht von mindestens 40 %, Folien aus amorphen Kunststoffen und transparenten Beschichtungen zum Schutz gegen mechanische Einwirkungen, wobei mindestens eine der Außenschichten aus einer Folie aus einem thermoplastischen Kunststoff besteht, ausgewählt aus Polyalkylenterephthalat, Polyalkylen-2,6-naphthalat und Polyalkylen4,4'-diphenyldicarboxylat, wobei der Alkylenrest ausgewählt ist aus 1,2-Äthylen-, 1,2- und 1,3-Propylen, 1,4-Butylen und dem Rest, der durch Entfernen der Hydroxylgruppen von Cyclohexandimethanol (1,4-Bishydrogymethyl-cyclohexan) entsteht, sowie deren Mischungen, und wobei die Innenschicht und die Außenschichten durch eine Gas- oder Flüssigkeitsschicht voneinander getrennt oder durch eine transparente Klebefolie, eine transparente Schicht eines Klebers oder durch Verschmelzen oder oberflächliche chemische Reaktion der benachbarten Schichten miteinander verbunden sind.

2. Transparenter Mehrschichtverbund nach Anspruch 1, **dadurch gekennzeichnet, daß** zwischen mindestens einer der Außenschichten und der Innenschicht keine Gasschicht als Trennschicht eingesetzt ist.

3. Transparenter Mehrschicht-Verbund nach Anspruch 1, **dadurch gekennzeichnet, daß** die Innenschicht eine Folie oder Scheibe aus einem amorphen Polymer mit einem kristallinen Anteil von unter 10 % ist.

4. Transparenter Mehrschicht-Verbund nach Anspruch 3, **dadurch gekennzeichnet, daß** die Innenschicht eine Folie oder Scheibe aus einem Kunststoff-Material ist, ausgewählt aus dem Polycarbonat von Bisphenol A, Copolyestercarbonaten von Bisphenol A mit Kohlensäure und anderen Säurebausteinen ausgewählt aus Iso- und Terephthalsäure sowie aromatischen Sulfon- und Phosphonsäuren, die jeweils mindestens eine Sulfon- oder Phosphonsäuregruppe und eine zweite Säuregruppe ausgewählt aus Carbon-, Sulfon- und Phosphonsäuregruppen tragen, sowie (Co)Polyestern aus den genannten Säuren und aromatischen oder gemischt aromatisch-aliphatischen Hydroxyverbindungen mit mindestens zwei Hydroxylgruppen pro Molekül.

5. Transparenter Mehrschicht-Verbund nach Anspruch 3, wobei sie die Innenschicht eine Folie oder Scheibe aus dem Polycarbonat von Bisphenol A ist.

6. Transparenter Mehrschicht-Verbund nach Anspruch 1, **dadurch gekennzeichnet, daß** zumindest eine Außenschicht eine kratzfeste Beschichtung aus einem Polysiloxan aufweist.

7. Transparenter Mehrschicht-Verbund nach Anspruch 1, **dadurch gekennzeichnet, daß** zumindest eine Außenschicht eine kratzfeste Beschichtung aus einem Melaminharz aufweist.

8. Transparenter Mehrschicht-Verbund nach Anspruch 1, **dadurch gekennzeichnet, daß** mindestens eine der Außenschichten aus Glas besteht.

9. Transparenter Mehrschicht-Verbund nach Anspruch 1, **dadurch gekennzeichnet, daß** die Innenschicht aus mindestens zwei aufeinanderlaminierten Folien aus denselben oder unterschiedlichen thermoplastischen Kunststoffen besteht.

10. Transparenter Mehrschicht-Verbund nach Anspruch 9, **dadurch gekennzeichnet, daß** die Folien gereckte Folien aus teilkristallinen Thermoplasten sind.

11. Transparenter Mehrschicht-Verbund nach Anspruch 10, **dadurch gekennzeichnet, daß** die Thermoplasten ausgewählt sind aus Polyäthylenterephthalat, Polyäthylen-2,6-naphthalat, und Copolyestern, die Anteile von den genannten Polyestern enthalten.

12. Transparenter Mehrschicht-Verbund nach Anspruch 10, **dadurch gekennzeichnet, daß** diese Folien so aufeinander laminiert sind, **daß** ihre Verstreckrichtungen bei einachsig orientierten Folien bzw. ihre Hauptfestigkeitsrichtung, die bei biaxial orientierten Folien die Richtung mit der höchsten Zugfestigkeit ist, in aufeinanderfolgenden Lagen jeweils rechtwinklig zueinander verlaufen.

13. Transparenter Mehrschicht-Verbund nach Anspruch 1, **dadurch gekennzeichnet, daß** mindestens einer der Außenschichten eine Folie oder eine auf der Innenschicht oder einer Außenschicht aufgebrachte Beschichtung umfaßt, die Copolymere von Acrylnitril, Polyvinylchlorid, Polyvinylidenchlorid, Polyvinylfluorid oder Polyvinylidenfluorid enthält.

14. Transparenter Mehrschicht-Verbund nach Anspruch 1, **dadurch gekennzeichnet, daß** die Dicke der als Außenschicht eingesetzten Folien von 1 µm bis zu 10 mm beträgt.

15. Transparenter Mehrschicht-Verbund nach Anspruch 1, **dadurch gekennzeichnet, daß** die Folien durch Farbstoffe transparent eingefärbt, metallisiert, gegen UV-Licht stabilisiert, durch Corona-Behandlung modifiziert, antistatisch, kratzgeschützt oder geschützt gegen Bemalen oder Besprühen ausgerüstet sind.

16. Transparenter Mehrschicht-Verbund nach Anspruch 1, **dadurch gekennzeichnet, daß** der Rand dieses Verbundes mit einer weichmacherfreien und lösungsmittelfreien selbstabbindenden bzw. selbsthärtenden dauerelastischen Dicht- oder Klebmasse bedeckt ist.

17. Transparenter Mehrschicht-Verbund nach Anspruch 16, **dadurch gekennzeichnet, daß** die dem Rand benachbarten Bereiche der Außenschichten ebenfalls mit derselben Dicht- oder Klebmasse bedeckt sind, wobei die Breite der randseitigen Beschichtung der Außen-schicht mindestens das 0,5-fache der Dicke des Verbunds beträgt.

18. Transparenter Mehrschicht-Verbund nach Anspruch 16 oder 17, **dadurch gekennzeichnet, daß** die Dichtmasse eine dauerelastische Polyurethan-Masse ist.

19. Transparenter Mehrschicht-Verbund nach Anspruch 16 oder 17, **dadurch gekennzeichnet, daß** der Dichtstoff eine dauerelastische Silikon-Masse ist.

20. Transparenter Mehrschicht-Verbund nach Anspruch 1, **dadurch gekennzeichnet, daß** der Rand und die randnahen Bereiche der Außenschichten mit einem Lack bedeckt sind, der kein Lösungsmittel enthält, das das Material der Innenscheibe angreift oder anlöst, und der eine Sperrschichtwirkung für Lösungsmittel oder Öle aufweist.

21. Transparenter Mehrschicht-Verbund nach Anspruch 1, **dadurch gekennzeichnet, daß** der Rand des transparenten Mehrschicht-Verbunds mit einer Folie abgeklebt ist.

22. Transparenter Mehrschicht-Verbund nach Anspruch 21, **dadurch gekennzeichnet, daß** die dem Rand benachbarten Bereiche der Außenschichten ebenfalls mit derselben Folie beklebt werden, und wobei die Breite der randseitigen Beschichtung der Außenschicht mindestens das 0,5-fache der Dicke des Verbunds beträgt.

23. Transparenter Mehrschicht-Verbund nach Anspruch 1, **dadurch gekennzeichnet, daß** der Rand mit einem selbstvulkanisierendes Band abgeklebt ist.

24. Transparenter Mehrschicht-Verbund nach Anspruch 1, **dadurch gekennzeichnet, daß** der Rand des Verbundes von einem Rahmen gasdicht umschlossen ist, der der Gestalt des Mehrschicht-Verbundes angepaßt ist.

25. Verfahren zur Herstellung von transparenten Mehrschicht-Verbunden durch Anordnen von zwei Außenschichten, deren Material ausgewählt ist aus Glas, Folien aus teilkristallinen Kunststoffen mit einer Transparenz für sichtbares Licht von mindestens 40 %, Folien aus amorphen Kunststoffen und transparenten Beschichtungen zum Schutz gegen mechanische Einwirkungen, wobei mindestens eine der Außenschichten aus einer Folie aus einem thermoplastischen Kunststoff besteht, ausgewählt aus Polyalkylenterephthalat, Polyalkylen-2,6-naphthalat und Polyalkylen4,4'-diphenyldicarboxylat, wobei der Alkylenrest ausgewählt ist aus 1,2-Äthylen-, 1,2- und 1,3-Propylen, 1,4-Butylen und dem Rest, der durch Entfernen der Hydroxylgruppen von Cyclohexandimethanol (1,4-Bishydroxymethyl-cyclohexan) entsteht, sowie deren Mischungen, auf beiden Seiten einer transparenten Innenschicht aus transparentem Kunststoff und Verbinden der sich berührenden Schichten durch eine transparente Klebefolie, eine transparente Schicht eines Klebers oder durch Verschmelzen oder oberflächliche chemische Reaktion der benachbarten Schichten.

26. Verfahren zur Herstellung von transparenten Mehrschicht-Verbunden durch planparalleles Anordnen von zwei Außenschichten, deren Material ausgewählt ist aus Glas, Folien aus teilkristallinen Kunststoffen mit einer Transparenz für sichtbares Licht von mindestens 40 %, Folien aus amorphen Kunststoffen und transparenten Beschichtungen zum Schutz gegen mechanische Einwirkungen, wobei mindestens eine der Außenschichten aus einer Folie aus einem thermoplastischen Kunststoff besteht, ausgewählt aus Polyalkylenterephthalat, Polyalkylen-2,6-naphthalat und Polyalkylen-4,4'-diphenyldicarboxylat, wobei der Alkylenrest ausgewählt ist aus 1,2-Äthylen-, 1,2- und 1,3-Propylen, 1,4-Butylen und dem Rest, der durch Entfernen der Hydroxylgruppen von Cyclohexandimethanol (1,4-Bishydroxymethylcyclohexan) entsteht, sowie deren Mischungen, auf beiden Seiten einer transparenten Innenschicht aus transparentem Kunststoff, und Ausfüllen des Raumes zwischen jeweils einer der Außenschichten und der Innenschicht mit Gasen, Flüssigkeiten, Gelen oder transparenten Vergußmassen.

27. Verfahren nach Anspruch 26, **dadurch gekennzeichnet, daß** höchstens einer der Räume zwischen der Innen- und einer Außenschicht mit einem Gas gefüllt ist.

28. Verfahren zur Herstellung von transparenten Mehrschicht-Verbunden, **dadurch gekennzeichnet, daß** als Innenschicht eine vorhandene Scheibe aus einem transparenten Kunststoff eingesetzt wird, die gemäß dem Verfahren nach Anspruch 25 oder Anspruch 26 nachgerüstet wird.

29. Verwendung von transparenten Mehrschicht-Verbunden gemäß Anspruch 1 als Schutzscheibe in Maschinen.

30. Verwendung nach Anspruch 29, **dadurch gekennzeichnet, daß** die Außenschicht der Maschinen-zugewandten Seite des Mehrschicht-verbundes eine Glasscheibe ist.

## Claims

1. A transparent multilayer composite made from at least three layers, encompassing an inner layer made from a transparent plastic and two outer layers whose material has been selected from the group consisting of glass, films made from semicrystalline plastics with a visible-light transparency of at least 40 %, films made from amorphous plastics, and transparent coatings for protection from mechanical effects, where at least one of the outer layers is composed of a film made from a thermoplastic selected from the group consisting of polyalkylene terephthalate, polyalkylene 2,6-naphthalate, and polyalkylene 4,4'-biphenyldicarboxylate, where the alkylene radical has been selected from the group consisting of 1,2-ethylene, 1,2- and 1,3-propylene, 1,4-butylene, and the radical obtained by removing the hydroxyl groups from cyclohexanedimethanol (1,4-bishydroxymethylcyclohexane), and also mixtures of these, and where a gas layer or liquid layer separates the inner layer and the outer layers from one another, or where the inner layer and the outer layers have been bonded to one another by a transparent adhesive film, by a transparent layer of an adhesive, or by fusion or a surface chemical reaction of the adjacent layers.

2. The transparent multilayer composite as claimed in claim 1, wherein between at least one of the outer layers and the inner layer there is no use of a gas layer as separating layer.

3. The transparent multilayer composite as claimed in claim 1, wherein the inner layer is a film or sheet made from an amorphous polymer with a crystalline fraction below 10 %.

4. The transparent multilayer composite as claimed in claim 3, wherein the inner layer is a film or sheet made from a plastic selected from the group consisting of the polycarbonate of bisphenol A, copolyester carbonates of bisphenol A with carbonic acid and other acid units selected from iso- and terephthalic acid, and also aromatic sulfonic and phosphonic acids, each of which has at least one sulfonic or phosphonic acid group and a second acid group selected from the group consisting of carboxylic, sulfonic, and phosphonic acid groups, and also (co)polyesters made from the acids mentioned and aromatic or mixed aromatic-aliphatic hydroxyl compounds having at least two hydroxyl groups per molecule.

5. The transparent multilayer composite as claimed in claim 3, where the inner layer is a film or sheet made from the polycarbonate of bisphenol A.

6. The transparent multilayer composite as claimed in claim 1, wherein at least one outer layer has a scratch-resistant coating made from a polysiloxane.

7. The transparent multilayer composite as claimed in claim 1, wherein at least one outer layer has a scratch-resistant coating made from a melamine resin.

8. The transparent multilayer composite as claimed in claim 1, wherein at least one of the outer layers is composed of glass.

9. The transparent multilayer composite as claimed in claim 1, wherein the inner layer is composed of at least two films laminated to one another and made from the same or different thermoplastics.

10. The transparent multilayer composite as claimed in claim 9, wherein the films are stretched films made from semicrystalline thermoplastics.

11. The transparent multilayer composite as claimed in claim 10, wherein the thermoplastics have been selected from the group consisting of polyethylene terephthalate, polyethylene 2,6-naphthalate, and copolyesters which contain fractions of the polyesters mentioned.

12. The transparent multilayer composite as claimed in claim 10, wherein the way in which these films have been laminated to one another is such that, for any given ply, the direction of orientation, in the case of monoaxially oriented films, or the direction of principal strength, this being the direction with the greatest tensile strength in biaxially oriented films, is always at right angles to that of the next ply.

13. The transparent multilayer composite as claimed in claim 1, wherein at least one of the outer layers encompasses a film or, applied to the inner layer or to an outer layer, a coating, comprising copolymers of acrylonitrile, polyvinyl chloride, polyvinylidene chloride, polyvinyl fluoride, or polyvinylidene fluoride.

14. The transparent multilayer composite as claimed in claim 1, wherein the thickness of the films used as outer layer is from 1 µm to 10 mm.

15. The transparent multilayer composite as claimed in claim 1, wherein the films have been transparently colored by dyes, metallized, stabilized with respect to UV light, modified by corona treatment, rendered antistatic, rendered scratch-resistant, or rendered resistant to painting or spraying.

16. The transparent multilayer composite as claimed in claim 1, wherein the edge of this composite has been covered with a plasticizer-free and solvent-free self-setting or self-curing, permanently flexible sealing or adhesive composition.

17. The transparent multilayer composite as claimed in claim 16, wherein the regions of the outer layers adjacent to the edge have likewise been covered with the same sealing or adhesive composition, the width of the edge coating on the outer layer being at least 0.5 times the thickness of the composite.

18. The transparent multilayer composite as claimed in claim 16 or 17, wherein the sealing composition is a permanently flexible polyurethane composition.

19. The transparent multilayer composite as claimed in claim 16 or 17, wherein the sealing material is a permanently flexible silicone composition.

20. The transparent multilayer composite as claimed in claim 1, wherein the edge and the regions of the outer layers close to the edge have been covered with a coating material which does not comprise any solvent that attacks or solubilizes the material of the inner sheet, the coating material having the effect of a barrier layer with respect to solvents or oils.

21. The transparent multilayer composite as claimed in claim 1, wherein the edge of the transparent multilayer composite has been sealed off with an adhesive film.

22. The transparent multilayer composite as claimed in claim 21, wherein the regions of the outer layers adjacent to the edge are likewise adhesively bonded using the same adhesive film, the width of the edge coating on the outer layer being at least 0.5 times the thickness of the composite.

23. The transparent multilayer composite as claimed in claim 1, wherein the edge has been sealed off with a self-vulcanizing tape.

24. The transparent multilayer composite as claimed in claim 1, wherein the edge of the composite has been enclosed in a gastight manner by a frame which has been matched to the shape of the multilayer composite.

25. A process for producing transparent multilayer composites by arranging two outer layers, whose material has been selected from the group consisting of glass, films made from semicrystalline plastics with a visible-light transparency of at least 40 %, films made from amorphous plastics, and transparent coatings for protection from mechanical effects, where at least one of the outer layers is composed of a film made from a thermoplastic selected from the group consisting of polyalkylene terephthalate, polyalkylene 2,6-naphthalate, and polyalkylene 4,4'-biphenyldicarboxylate, where the alkylene radical has been selected from the group consisting of 1,2-ethylene, 1,2- and 1,3-propylene, 1,4-butylene, and the radical obtained by removing the hydroxyl groups from cyclohexanedimethanol (1,4-bishydroxymethylcyclohexane), and also mixtures of these on the two sides of a transparent inner layer made from transparent plastic, and bonding the mutually contacting layers via a transparent adhesive film or via a transparent layer of an adhesive, or via fusion or surface chemical reaction of the adjacent layers.

26. A process for producing transparent multilayer composites by plan-parallel arrangement of two outer layers, whose material has been selected from the group consisting of glass, films made from semicrystalline plastics with a visible-light transparency of at least 40 %, films made from amorphous plastics, and transparent coatings for protection from mechanical effects, where at least one of the outer layers is composed of a film made from a thermoplastic selected from the group consisting of polyalkylene terephthalate, polyalkylene 2,6-naphthalate, and polyalkylene 4,4'-biphenyldicarboxylate, where the alkylene radical has been selected from the group consisting of 1,2-ethylene, 1,2- and 1,3-propylene, 1,4-butylene, and the radical obtained by removing the hydroxyl groups from cyclohexanedimethanol (1,4-bishydroxymethylcyclohexane), and also mixtures of these on the two sides of a transparent inner layer made from transparent plastic, and filling the space between each outer layer and the inner layer with gases, liquids, gels, or transparent encapsulating compositions.

27. The process as claimed in claim 26, wherein at most one of the spaces between the inner layer and an outer layer has been filled with a gas.

28. A process for producing transparent multilayer composites, which comprises using, as inner layer, an existing sheet of a transparent plastic, the sheet then being post-treated by the process as claimed in claim 25 or claim 26.

29. The use of transparent multilayer composites as claimed in claim 1 as a shield in machinery.

30. The use as claimed in claim 29, wherein the outer layer of that side of the multilayer composite facing toward the machinery is a sheet of glass.

## Revendications

1. Composite multicouche transparent à base d'au moins trois couches, à savoir une couche interne en matériau synthétique transparent et deux couches externes dont le matériau est choisi parmi le verre, les feuilles en matériaux synthétiques partiellement cristallins ayant une transparence à la lumière visible d'au moins 40 %, les feuilles en matériaux synthétiques amorphes, et les revêtements transparents destinés à protéger contre des influences mécaniques, où au moins une des couches externes est constituée d'une feuille en matériau synthétique thermoplastique, choisi parmi le poly(téréphtalate d'alkylène), le poly(2,6-naphtalate d'alkylène) et le poly(4,4'-diphényl-dicarboxylate d'alkylène), où le radical alkylène est choisi parmi le 1,2-éthylène, le 1,2- et le 1,3-propylène, le 1,4-butylène et le radical résultant de l'élimination des groupements hydroxyle de cyclohexanediméthanol (1,4-bishydroxyméthylcyclohexane) ainsi que leurs mélanges, la couche interne et les couches externes étant séparées l'une de l'autre par une couche de gaz ou de liquide ou étant reliées l'une à l'autre par une feuille adhésive transparente, une couche transparente de colle ou par fusion ou réaction chimique superficielle des couches voisines.

2. Composite multicouche transparent selon la revendication 1, **caractérisé en ce que**, entre au moins l'une des couches externes et la couche interne, on n'utilise pas de couche gazeuse comme couche de séparation..

3. Composite multicouche transparent selon la revendication 1, **caractérisé en ce que** la couche interne est une feuille ou une plaque en polymère amorphe ayant une fraction cristalline inférieure à 10 %.

4. Composite multicouche transparent selon la revendication 3, **caractérisé en ce que** la couche interne est une feuille ou une plaque en un matériau synthétique choisi parmi le polycarbonate de bisphénol A, les copolyestercarbonates de bisphénol A avec de l'acide carbonique et d'autres composants acides choisis parmi les acides isophtalique et téréphtalique ainsi que parmi les acides sulfonique et phosphonique aromatiques qui portent respectivement au moins un groupement acide sulfonique ou acide phosphonique et un deuxième groupement acide choisi parmi les groupements acide carboxylique, acide sulfonique et acide phosphonique ainsi que les (co)polyesters des acides cités et des composés hydroxylés aromatiques ou aromatiques-aliphatiques mixtes ayant au moins deux groupements hydroxyle par molécule.

5. Composite multicouche transparent selon la revendication 3, dans lequel la couche interne est une feuille ou une plaque constituée du polycarbonate de bisphénol A.

6. Composite multicouche transparent selon la revendication 1, **caractérisé en ce qu'**au moins une couche externe présente un revêtement de polysiloxane résistant aux éraflures.

7. Composite multicouche transparent selon la revendication 1, **caractérisé en ce qu'**au moins une couche externe présente un revêtement de résine mélamine résistant aux éraflures.

8. Composite multicouche transparent selon la revendication 1, **caractérisé en ce qu'**au moins une des couches externes est constituée de verre.

9. Composite multicouche transparent selon la revendication 1, **caractérisé en ce que** la couche interne est constituée d'au moins deux feuilles, laminées l'une sur l'autre, constituées de matériaux synthétiques thermoplastiques identiques ou différents.

10. Composite multicouche transparent selon la revendication 9, **caractérisé en ce que** les feuilles sont des feuilles étirées à base de thermoplastiques partiellement cristallins.

11. Composite multicouche transparent selon la revendication 10, **caractérisé en ce que** les thermoplastiques sont choisis parmi le poly(téréphtalate d'éthylène), le poly(2,6-naphtalate d'éthylène) et des copolyesters qui contiennent des fractions des polyesters cités.

12. Composite multicouche transparent selon la revendication 10, **caractérisé en ce que** lesdites feuilles sont laminées l'une sur l'autre de sorte que leurs directions d'extension dans des feuilles à orientation monoaxiale ou leur direction de résistance principale, qui, dans des feuilles à orientation biaxiale, est la direction ayant la plus haute résistance à la traction, s'étendent perpendiculairement l'une par rapport à l'autre dans des couches successives.

13. Composite multicouche transparent selon la revendication 1, **caractérisé en ce qu'**au moins une des couches externes comprend une feuille ou un revêtement appliqué(e) sur la couche interne ou sur une couche externe, qui contient des copolymères d'acrylonitrile, de poly(chlorure de vinyle), de poly(chlorure de vinylidène), de poly(fluorure de vinyle) ou de poly(fluorure de vinylidène).

14. Composite multicouche transparent selon la revendication 1, **caractérisé en ce que** l'épaisseur des feuilles utilisées comme couche externe est de 1 µm à 10 mm.

15. Composite multicouche transparent selon la revendication 1, **caractérisé en ce que** les feuilles sont colorées de manière transparente par des colorants, métallisées, stabilisées contre la lumière UV, modifiées par traitement corona, rendues antistatiques, protégées contre les éraflures ou protégées de la peinture ou des aspersions.

16. Composite multicouche transparent selon la revendication 1, **caractérisé en ce que** le bord dudit composite est recouvert d'une masse étanche ou dé colle sans plastifiant et sans solvant à élasticité permanente autosolidifiant ou autodurcissant.

17. Composite multicouche transparent selon la revendication 16, **caractérisé en ce que** les zones des couches externes voisines du bord sont en outre recouvertes de la même masse étanche ou de la même colle, la largeur du revêtement sur le bord de la couche externe représentant au moins 0,5 fois l'épaisseur du composite.

18. Composite multicouche transparent selon l'une quelconque des revendications 16 ou 17, **caractérisé en ce que** la masse étanche est une masse de polyuréthanne à élasticité permanente.

19. Composite multicouche transparent selon l'une quelconque des revendications 16 ou 17, **caractérisé en ce que** la substance étanche est une masse de silicone à élasticité permanente.

20. Composite multicouche transparent selon la revendication 1, **caractérisé en ce que** le bord et les zones des couches externes voisines du bord sont recouverts d'un vernis qui ne contient pas de solvant susceptible d'attaquer ou de corroder le matériau de la plaque interne et qui exerce une action de couche d'arrêt pour des solvants ou des huiles.

21. Composite multicouche transparent selon la revendication 1, **caractérisé en ce que** le bord du composite multicouche transparent est collé par une feuille.

22. Composite multicouche transparent selon la revendication 21, **caractérisé en ce que** les zones des couches externes voisines du bord sont également collées par la même feuille, la largeur du revêtement sur le bord de la couche externe représentant au moins 0,5 fois l'épaisseur du composite.

23. Composite multicouche transparent selon la revendication 1, **caractérisé en ce que** le bord est collé par une bande autovulcanisante.

24. Composite multicouche transparent selon la revendication 1, **caractérisé en ce que** le bord du composite est entouré de manière étanche aux gaz par un cadre qui est ajusté à la forme du composite multicouche.

25. Procédé de fabrication de composites multicouches transparents en agençant deux couches externes, dont le matériau est choisi parmi le verre, les feuilles en matériaux synthétiques partiellement cristallins d'une transparence à la lumière visible d'au moins 40 %, les feuilles en matériaux synthétiques amorphes et les revêtements transparents pour protéger des influences mécaniques, où au moins une des couches externes est constituée d'une feuille en matériau synthétique thermoplastique, choisi parmi le poly(téréphtalate d'alkylène), le poly(2,6-naphtalate d'alkylène) et le poly(4,4'-diphényldicarboxylate d'alkylène), dans lequel le radical alkylène est choisi parmi le 1,2-éthylène, le 1,2- et le 1,3-propylène, le 1,4-butylène et le radical résultant de l'élimination des groupements hydroxyle du cyclohexanediméthanol (1,4-bishydroxyméthyl-cyclohexane) ainsi que leurs mélanges, sur les deux côtés d'une couche interne transparente en matériau synthétique transparent, et en reliant les couches qui se touchent par une feuille adhésive transparente, une couche transparente de colle ou par fusion ou réaction chimique superficielle des couches voisines.

26. Procédé de fabrication de composites multicouches transparents par agencement plan-parallèle de deux couches externes dont le matériau est choisi parmi le verre, les feuilles en matériaux synthétiques partiellement cristallins ayant une transparence à la lumière visible d'au moins 40 %, les feuilles en matériaux synthétiques amorphes et des revêtements transparents destinés à protéger contre les influences mécaniques, où au moins une des couches externes est constituée d'une feuille en matériau synthétique thermoplastique, choisi parmi le poly(téréphtalate d'alkylène), le poly(2,6-naphtalate d'alkylène) et le poly(4,4'-diphényldicarboxylate d'alkylène), où le radical alkylène est choisi parmi le 1,2-éthylène, le 1,2- et le 1,3-propylène, le 1,4-butylène et le radical résultant de l'élimination des groupements hydroxyle du cyclohexanediméthanol (1,4-bishydroxyméthylcyclohexane) ainsi que leurs mélanges, sur les deux faces d'une couche interne transparente en matériau synthétique transparent, et remplissage de l'espace entre respectivement une des couches externes et la couche interne par des gaz, des liquides, des gels ou des masses de moulage transparentes.

27. Procédé selon la revendication 26, **caractérisé en ce qu'**au maximum un des espaces entre la couche interne et la couche externe est rempli d'un gaz.

28. Procédé de fabrication de composites multicouches transparents, **caractérisé en ce que** l'on utilise comme couche interne une plaque préexistante constituée d'un matériau synthétique transparent, qui est installée ultérieurement selon le procédé de la revendication 25 ou 26.

29. Utilisation de composites multicouches transparents selon la revendication 1 à titre de plaque de protection dans des machines.

30. Utilisation selon la revendication 29, **caractérisée en ce que** la couche externe de la face du composite multicouche tournée vers la machine est une plaque en verre.
